# FASCICULE DE BREVET EUROPEEN

(11) **EP 0 845 199 B1**
(45) Date de publication et mention de la délivrance du brevet: **30.05.2001**
(21) Numéro de dépôt: 97440109.3
(22) Date de dépôt: 18.11.1997
(51) Int. Cl.: A01D 78/10

(54) **Machine de fenaison**
Heuwerbungsmaschine
Haymaking machine

(30) Priorité: 26.11.1996 FR 9614819
(43) Date de publication de la demande: 03.06.1998
(73) Titulaire: KUHN S.A., 67700 Saverne (FR)
(72) Inventeur: Aron, Jérôme, 67330 Dossenheim-Sur-Zinsel (FR); Helfer, Marc, 67700 Ottersthal (FR)
(74) Mandataire: Andres, Jean-Claude

(56) Documents cités:
- DE-A- 1 932 229
- DE-A- 4 021 812
- DE-B- 2 127 701
- DE-U- 9 400 521
- FR-A- 1 327 063
- NL-A- 7 607 093

## Description

La présente invention se rapporte à une machine de fenaison, notamment une andaineuse de végétaux fauchés, comportant un bâti avec plusieurs rotors d'andainage, lesquels rotors d'andainage sont entraînés en rotation durant le travail autour d'axes sensiblement verticaux qui sont munis de supports équipés de roues porteuses, ledit bâti possédant une poutre de traction et une poutre de liaison à laquelle est relié au moins un des rotors d'andainage, la poutre de liaison étant articulée par rapport à la poutre de traction de manière à pouvoir être déplacée avec le ou les rotors qui y sont reliés latéralement vers la droite et/ou vers la gauche, au moins le rotor le plus éloigné de l'articulation avec la poutre de traction étant flanquée d'un déflecteur d'andainage qui est réglable dans plusieurs positions par rapport audit rotor. Le document DE 2127 701 B révèle une machine de ce genre.

Sur une machine connue de ce genre, les déplacements latéraux de la poutre de liaison et du ou des rotors qui y sont reliés sont effectués au moyen de vérins hydrauliques commandés depuis le tracteur. Ces déplacements latéraux sont destinés à décaler les rotors de sorte qu'ils se situent sur une ligne oblique par rapport à la direction d'avancement pour le travail d'andainage et à les aligner l'un derrière l'autre pour le transport.

Lors de ces déplacements, l'utilisateur est toutefois obligé de modifier manuellement la position du déflecteur d'andainage. Il doit l'éloigner du rotor dans la position de travail et le rapprocher au maximum dudit rotor pour le transport afin de réduire la largeur de la machine. Ces opérations sont fastidieuses pour l'utilisateur et entraînent des pertes de temps. Il doit à chaque fois arrêter le tracteur, quitter le siège, se rendre jusqu'à l'extrémité arrière de la machine, déplacer le déflecteur et revenir au tracteur. L'utilisateur peut aussi omettre de modifier la position du déflecteur d'andainage. Cela est particulièrement grave lorsque la machine doit être déplacée sur une route vu que le déflecteur dépasse alors de l'encombrement général de la machine.

La présente invention a pour but de supprimer les inconvénients précités de la machine connue. Elle doit notamment simplifier les opérations de réglage du déflecteur d'andainage et assurer qu'elles soient correctement effectuées lors de chaque transposition.

A cet effet, une importante caractéristique de l'invention consiste en ce que le déflecteur d'andainage est relié au moyen d'au moins un levier à un support qui est lié à l'axe sensiblement vertical du rotor à côté duquel se situe ledit déflecteur d'andainage, que ce levier est déplaçable par rapport audit support et qu'il est relié à la poutre de liaison du bâti à travers une tringle.

Cet agencement permet d'obtenir un réglage automatique de la position du déflecteur d'andainage lors du déplacement de la poutre de liaison pour mettre la machine en position de travail ou en position de transport. Ladite poutre entraîne alors la tringle qui déplace le levier de sorte qu'il rapproche le déflecteur d'andainage du rotor lors de la mise en position de transport et qu'il l'en éloigne lors de la mise en position de travail.

Les moyens mis en oeuvre pour le réglage automatique du déflecteur d'andainage sont extrêmement simples et ne nécessitent pas de manoeuvres particulières de la part de l'utilisateur.

Selon une autre caractéristique, la tringle est articulée par rapport au levier et à la poutre de liaison au moyen d'axes dont au moins un est déplaçable. Ceci permet de faire varier l'écartement en position de travail entre le déflecteur d'andainage et le rotor auquel il est associé. L'utilisateur peut ainsi choisir ledit écartement en fonction du volume du fourrage à andainer. De plus, quelle que soit la position de ce déflecteur d'andainage durant le travail, il revient automatiquement se placer contre ledit rotor lors de la mise en position de transport.

D'autres caractéristiques et avantages de l'invention ressortiront de la description qui va suivre et qui se réfère aux dessins annexés qui représentent, à titre d'exemples non limitatifs, quelques formes de réalisation de la machine selon l'invention.

Dans ces dessins :
- la figure 1 représente une vue de dessus d'une machine selon l'invention en position de travail ;
- la figure 2 représente la même machine en position de transport ;
- la figure 3 représente une vue de détail d'un exemple de réalisation des moyens de réglage du déflecteur d'andainage dans différentes positions de travail ;
- la figure 4 représente les moyens de réglage selon l'exemple de la figure 3 en position de transport ;
- la figure 5 représente une vue de détail d'un autre exemple de réalisation des moyens de réglage du déflecteur d'andainage dans différentes positions de travail ;
- la figure 6 représente les moyens de réglage selon l'exemple de la figure 5 en position de transport.

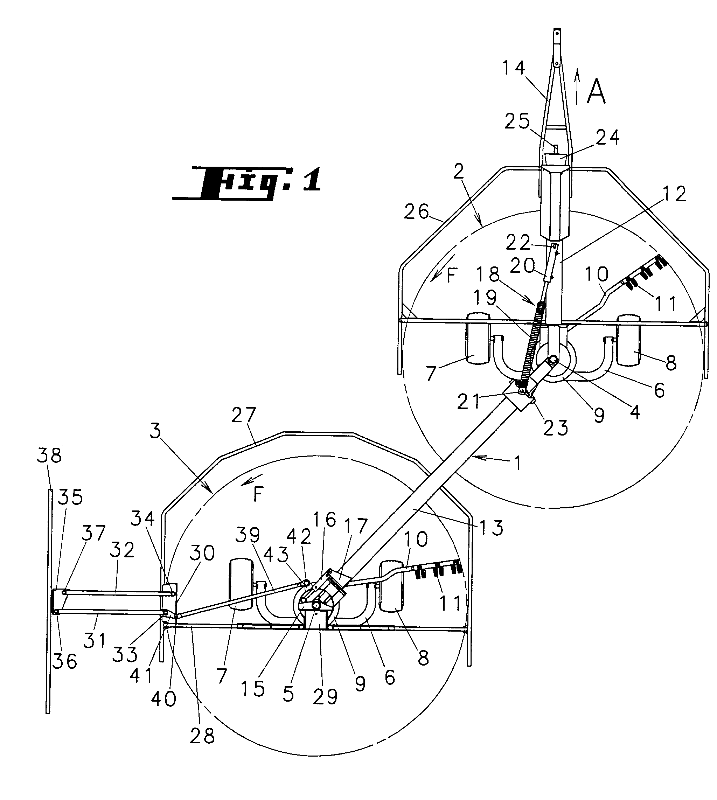

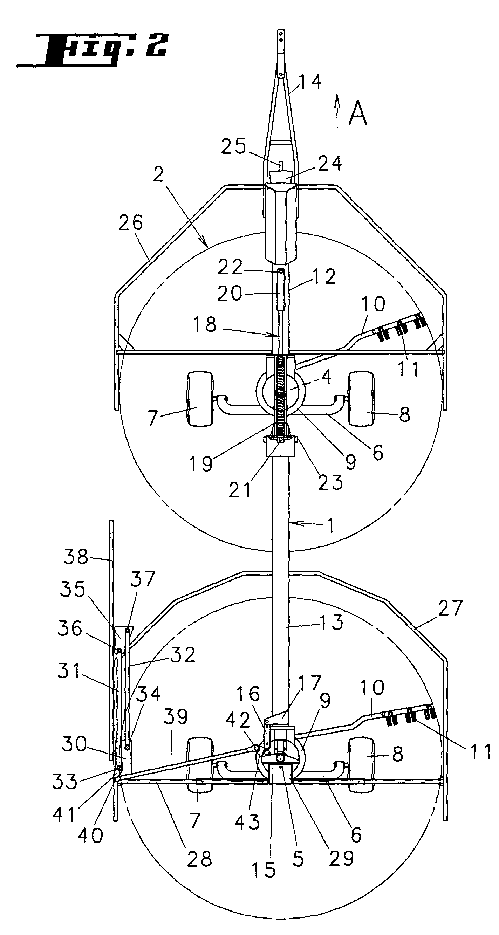

Telle qu'elle est représentée sur les figures 1 et 2, la machine selon l'invention comporte un bâti (1) qui porte deux rotors d'andainage (2 et 3) situés à une certaine distance l'un de l'autre. Ces rotors (2 et 3) sont montés rotatifs sur des axes (4 et 5) sensiblement verticaux. Chacun de ces axes (4 et 5) porte à son extrémité inférieure un support (6) équipé de deux roues porteuses (7 et 8). Ce support (6) est réglable hydrauliquement en hauteur par rapport à l'axe (4, 5) correspondant de manière à pouvoir modifier la distance du rotor (2 ou 3) correspondant par rapport au sol.

Chacun de ces rotors (2 et 3) se compose essentiellement d'un carter central (9) qui est monté sur l'axe (4, 5) correspondant au moyen de roulements à billes. Ce carter central (9) porte plusieurs bras (10) qui s'étendent dans un plan pratiquement horizontal. Un seul de ces bras (10) est représenté pour préserver la clarté des dessins. Ils sont munis à leurs extrémités les plus éloignées dudit carter (9) de fourches de râtelage (11). Chacun de ces bras (10) est monté dans un palier du carter central (9) de manière à pouvoir pivoter sur lui-même, c'est-à-dire autour de son axe géométrique longitudinal. Dans le carter central (9) se situe une came de commande qui est fixée sur l'axe (4, 5) correspondant. Chaque bras porte-fourche (10) possède à son extrémité située à l'intérieur du carter central (9) un galet qui coopère avec ladite came de commande.

Le bâti (1) comprend une poutre de traction (12) et une poutre de liaison (13). La poutre de traction (12) est fixée sur l'extrémité supérieure de l'axe sensiblement vertical (4) du rotor (2) appelé premier rotor. Elle s'étend au-dessus de ce rotor (2), légèrement au-delà de ses bras porte-fourches (10).

A son extrémité la plus éloignée de l'axe (4) du rotor (2), elle porte un timon (14) qui permet l'attelage à un tracteur servant à déplacer et à animer la machine. L'une des extrémités de la poutre de liaison (13) est articulée sur l'axe (4) sensiblement vertical du premier rotor (2) de manière à pouvoir pivoter autour de celui-ci. Elle pourrait aussi bien être articulée sur un axe sensiblement vertical solidaire de la poutre de traction (12). L'autre extrémité de la poutre de liaison (13) est articulée sur l'axe (5) sensiblement vertical du deuxième rotor (3). Cet axe (5) peut tourner sur lui-même par rapport à la poutre (13). Il comporte à son extrémité supérieure un manchon (15). Celui-ci est immobilisé sur ladite extrémité à l'aide d'un moyen tel qu'une clavette ou une goupille. Ce manchon (15) possède un bras latéral sur lequel est articulée la tige d'un vérin hydraulique (16). Le corps de ce vérin hydraulique (16) est articulé sur une chape (17) qui est solidaire de la poutre de liaison (13). Ledit vérin hydraulique (16) peut être commandé depuis le tracteur. Il permet de déplacer le manchon (15) de telle sorte qu'il fasse tourner l'axe (5) sensiblement vertical sur lui-même.

Un dispositif de maintien (18) est disposé entre la poutre de traction (12) et la poutre de liaison (13) en vue de favoriser le placement du second rotor (3) dans une position décalée latéralement par rapport au premier rotor (2) durant le travail. Ce dispositif de maintien (18) se compose d'un ressort (19) et d'un vérin hydraulique (20). Ledit ressort (19) est accroché, par l'une de ses extrémités, à un axe (21) solidaire de la poutre de liaison (13) et, par son autre extrémité, à la tige du vérin hydraulique (20). Le corps de ce dernier est articulé au moyen d'un axe (22) sur la poutre de traction (12).

La poutre de liaison (13) comporte un axe d'articulation (23) réalisé en deux parties alignées l'une sur l'autre. Cet axe (23) est sensiblement horizontal et s'étend transversalement à la poutre (13). Il se situe à proximité de l'axe (4) sensiblement vertical du premier rotor (2), ce qui permet au second rotor (3) de se déplacer en hauteur d'une manière importante autour dudit axe (23), pour suivre les dénivellations du sol.

L'entraînement en rotation des deux rotors (2 et 3) est assuré mécaniquement à partir de l'arbre de prise de force du tracteur. A cet effet, la poutre de traction (12) porte à son extrémité avant un carter d'entrée (24) avec un arbre (25) auquel peut être relié un arbre à cardans entraîné depuis le tracteur. Dans la poutre de traction (12) est logé un premier arbre de transmission qui s'étend du carter d'entrée (24) jusqu'au premier rotor (2). Il porte un pignon qui engrène avec une couronne dentée solidaire du carter central (9) de ce rotor (2). Un second arbre de transmission qui est logé dans la poutre de liaison (13) s'étend entre les deux rotors (2 et 3). Il comporte à son extrémité avant un pignon qui engrène avec une deuxième couronne dentée qui est également solidaire du carter central (9) du premier rotor (2) et dont la denture est dirigée vers le côté opposé à celle de la couronne précitée. A son extrémité arrière il comporte un autre pignon qui engrène avec une couronne dentée solidaire du carter central (9) du deuxième rotor (3). Ce second arbre de transmission comporte une articulation à cardan au niveau de l'axe d'articulation (23) de la poutre de liaison (13).

La poutre de traction (12) porte un dispositif de protection (26). Celui-ci est constitué par un tube coudé qui entoure au moins la moitié avant du premier rotor (2). Un deuxième dispositif de protection (27) entoure la moitié avant du deuxième rotor (3). Il est constitué par un tube coudé fixé sur un support transversal (28). Ce support (28) est relié au manchon (15) par une entretoise (29).

Le support (28) comporte en sus une plaque (30) sur laquelle sont articulés deux leviers (31 et 32) au moyen d'axes (33 et 34) sensiblement verticaux. Ces leviers (31 et 32) sont sensiblement parallèles et ont sensiblement la même longueur. Ils sont en sus articulés sur une patte (35) au moyen d'axes (36 et 37) sensiblement verticaux. Cette patte (35) est solidaire d'un déflecteur d'andainage (38) qui s'étend latéralement au deuxième rotor (3). Ce déflecteur (38) est réalisé sous forme de grille ou toile et est dirigé dans la direction d'avancement (A).

Le levier (31) est relié à la poutre de liaison (13) du bâti (1) au moyen d'une tringle (39). Celle-ci est articulée, à l'aide d'un premier axe (40) sensiblement vertical, sur une patte (41) du levier (31) et, à l'aide d'un second axe (42) sensiblement vertical, sur une patte (43) qui est solidaire de la poutre de liaison (13). Cette patte (43) se situe légèrement plus en avant que l'axe (5) du deuxième rotor (3). La patte (41) du levier (31) se situe au-delà de son axe d'articulation (33) sur le support (28, 30). En raison de cet agencement, la poutre de liaison (13) déplace la tringle (39) lorsqu'elle est elle même pivotée autour de l'axe (4) sensiblement vertical du premier rotor (2). Ladite tringle (39) actionne alors le levier (31) de sorte qu'il rapproche ou éloigne le déflecteur (38) du second rotor d'andainage (3).

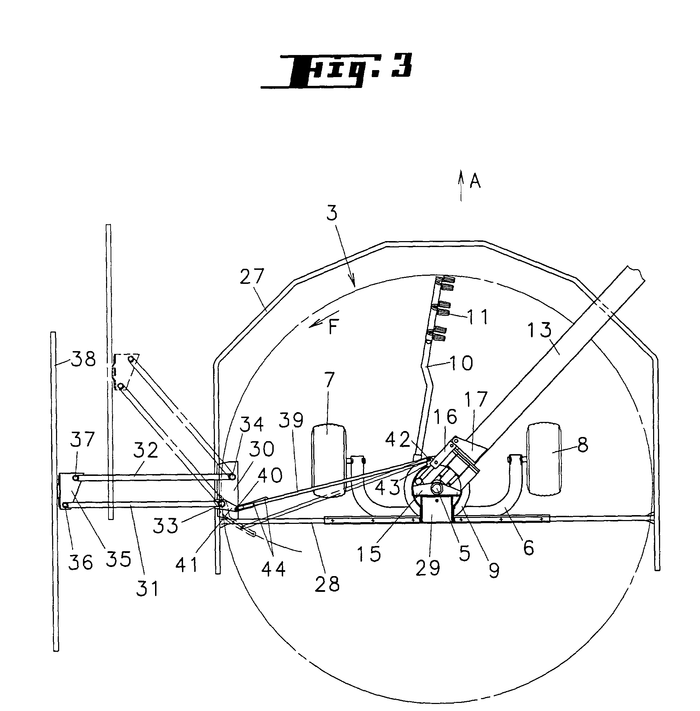

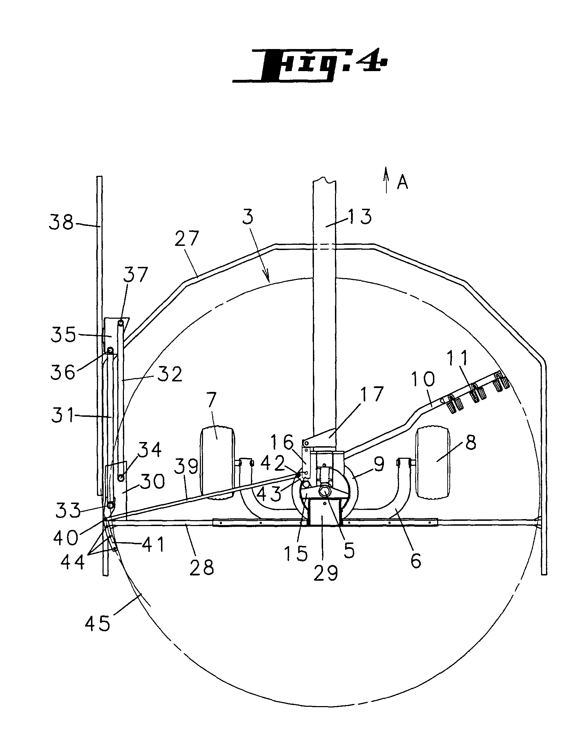

Au moins un des axes d'articulation (40 et 42) de la tringle (39) peut être déplacé en vue de pouvoir régler la position du déflecteur d'andainage (38) au travail. Dans l'exemple représenté sur les figures 3 et 4, la patte (41) du levier (31) comporte plusieurs orifices (44) dans chacun desquels peut être engagé l'axe d'articulation (40) de la tringle (39). Il est ainsi possible de modifier, en choisissant l'un ou l'autre de ces orifices (44), l'écartement durant le travail entre le déflecteur d'andainage (38) et le rotor (3). Une position intermédiaire est représentée en traits mixtes sur la figure 3. Les orifices (44) se situent sur un arc de cercle (45) dont le centre se trouve sur l'axe d'articulation (42) de la tringle (39) lorsque la machine est en position de transport (figure 4). En raison de cette disposition, la tringle (39) et le levier (31) ramènent automatiquement le déflecteur (38), à partir de chacune des positions de travail, contre le rotor (3) lors de la mise en position de transport.

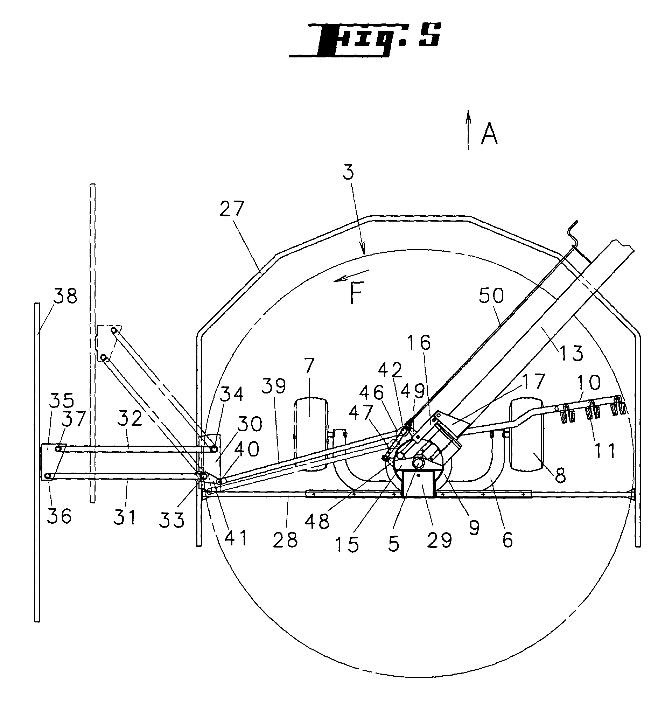

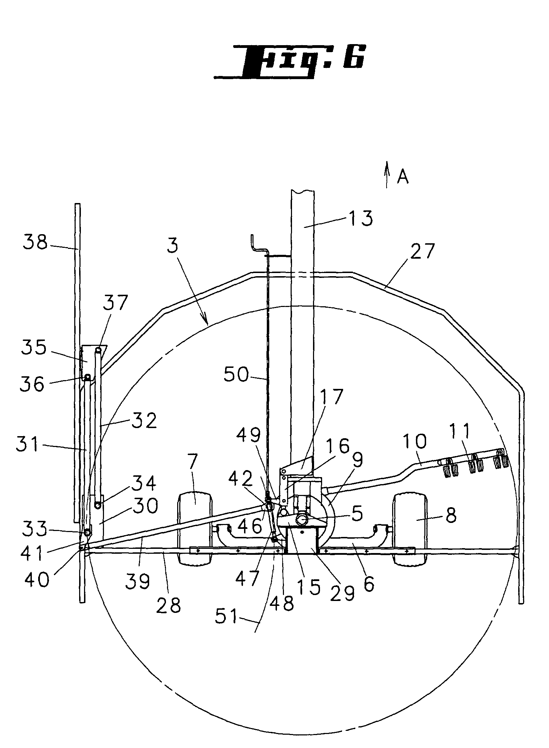

Dans l'exemple selon les figures 5 et 6, la tringle (39) est articulée au moyen de l'axe (40) sur une patte (41) solidaire du levier (31) et au moyen de l'axe (42) sur un coulisseau (46) qui est relié à la poutre de liaison (13). Ce coulisseau (46) est vissé sur une tige filetée (47) qui est tenue par des pattes (48 et 49) solidaires de la poutre de liaison (13). Cette tige filetée (47) est libre en rotation et bloquée en translation. Elle est reliée à une manivelle (50) qui permet de la faire tourner sur elle-même. Le coulisseau (46) se déplace alors longitudinalement sur cette tige filetée (47). Il déplace ainsi l'axe d'articulation (42) de la tringle (39). Cette dernière actionne de ce fait le levier (31) de telle sorte qu'il pivote autour de son axe d'articulation (33) et modifie la position du déflecteur d'andainage (38) par rapport au rotor (3). Ce mode de réalisation offre un plus grand choix de positions pour le déflecteur d'andainage (38).

La tige filetée (47) est avantageusement tangente à un arc de cercle (51) dont le centre se situe sur l'axe d'articulation (40) de la tringle (39) sur la patte (41) du levier (31) lorsque la machine est en position de transport (figure 6). De ce fait, la tringle (39) et le levier (31) ramènent automatiquement le déflecteur d'andainage (38) contre le rotor (3) lors de la mise en position de transport et ce, quelle que soit sa position durant le travail.

L'andaineur décrit ci-dessus peut être accroché à un tracteur au moyen du timon (14) et être déplacé dans la direction (A). Lorsque l'utilisateur arrive sur le lieu d'andainage, la machine est dans la position de transport dans laquelle les rotors (2 et 3) se situent l'un derrière l'autre (figure 2). Pour la mettre en position de travail (figure 1), il actionne à partir du tracteur le vérin hydraulique (16) situé entre la poutre de liaison (13) et le manchon (15) de sorte qu'il s'allonge. Celui-ci fait alors tourner, par l'intermédiaire dudit manchon (15), l'axe (5) sensiblement vertical du deuxième rotor (3) sur lui-même. Le support (6) et les roues porteuses (7 et 8) tournent avec ledit axe (5) et s'orientent vers le côté gauche lorsqu'on regarde dans la direction d'avancement (A). L'entretoise (29), le support transversal (28) et le dispositif de protection (27) tournent également avec ledit axe (5). La tringle (39) exerce alors une traction sur la patte (41) du levier (31) de sorte que celui-ci pivote autour de son axe d'articulation (33) et éloigne automatiquement le déflecteur d'andainage (38) du rotor (3). Le deuxième levier (32) pivote d'une manière similaire autour de son axe d'articulation (34) de sorte que le déflecteur (38) soit toujours orienté dans la direction d'avancement (A).

Dans l'exemple selon les figures 3 et 4, le déplacement souhaité du déflecteur (38) peut être réglé en fonction du volume du fourrage à andainer. Ainsi, dans le cas où le volume est important, l'axe d'articulation (40) de la tringle (39) est placé dans l'orifice (44) de la patte (41) qui est le plus proche de l'axe d'articulation (33) du levier (31). Celui-ci pivotera alors au maximum vers l'extérieur, afin d'obtenir un grand écartement par rapport au rotor (3). Au contraire, si le volume du fourrage à andainer est faible, l'utilisateur choisira un orifice (44) plus éloigné de l'axe d'articulation (33) du levier (31). Dans ce cas, le pivotement vers l'extérieur sera plus faible, ce qui favorisera la formation d'un andain compact.

Dans l'exemple selon les figures 5 et 6, l'écartement entre le déflecteur d'andainage (38) et le rotor (3) est augmenté lorsque l'utilisateur déplace le coulisseau (46) sur la tige filetée (47) dans la direction d'avancement (A). La tringle (39) fait alors pivoter le levier (31) vers l'extérieur d'un angle pouvant atteindre 90°. Des écartements moins importants sont obtenus lorsque le coulisseau (46) se situe plus en arrière sur la tige filetée (47). Les déplacements précités du coulisseau (46) sont effectués en faisant tourner la tige filetée (47) à l'aide de la manivelle (50).

Le positionnement de l'axe (40 ou 42) de la tringle (39) peut être effectué avant la mise en position de travail ou à n'importe quel moment durant le travail.

Après avoir fait tourner l'axe (5) sensiblement vertical tel que décrit précédemment l'utilisateur déplace la machine dans la direction (A). Il peut aussi effectuer les deux opérations simultanément. Les roues porteuses (7 et 8) font alors tourner la poutre de liaison (13) autour de l'axe (4) sensiblement vertical du premier rotor (2) jusqu'à ce qu'elles soient à nouveau orientées dans la direction d'avancement (A). Dans cette nouvelle position le deuxième rotor (3) est décalé par rapport au premier rotor (2). Dans cette position, l'utilisateur actionne le vérin hydraulique (20) du dispositif de maintien (18) de sorte qu'il se raccourcisse. Il tend alors le ressort (19) qui exerce une traction sur la poutre de liaison (13). Celle-ci reste ainsi dans la position oblique dans toutes les conditions.

Il reste à l'utilisateur d'abaisser les rotors (2 et 3) en faisant pivoter les supports (6) vers le bas de sorte que les fourches (11) touchent le sol et à les entraîner en rotation au moyen de l'arbre de prise de force du tracteur. Ils tournent alors dans le même sens (F). Les fourches (11) ramassent, dans la partie avant de leur trajectoire, le fourrage qui se trouve sur le sol. Ensuite, elles le déposent sous la forme d'un andain dans la partie latérale de leur trajectoire. En raison de la disposition des deux rotors (2 et 3), le fourrage déposé par le premier rotor (2) est repris par le deuxième rotor (3) qui forme un andain latéral de plus gros volume contre le déflecteur d'andainage (38).

Pour transposer la machine dans la position de transport représentée sur la figure 2, l'utilisateur actionne les moyens hydrauliques des supports (6) de manière à soulever les rotors (2 et 3) et à dégager les fourches (11) du sol. Ensuite, il actionne le vérin hydraulique (16) afin qu'il se raccourcisse et tourne le manchon (15), l'axe (5) sensiblement vertical et le support (6) avec les roues porteuses (7 et 8). Ces dernières pivotent alors vers la droite et s'orientent dans une direction qui est parallèle à la poutre de liaison (13). Le support (28) du dispositif de protection (27) tourne également avec le manchon (15) vers la droite. La tringle (39) exerce alors une pression sur la patte (41) et fait pivoter le levier (31) autour de son axe d'articulation (33) de sorte qu'il ramène automatiquement le déflecteur d'andainage (38) contre le rotor (3). Le deuxième levier (32) pivote de la même manière autour de son axe d'articulation (34). Ces deux leviers (31 et 32) positionnent ainsi le déflecteur (38) dans une position parallèle à la poutre de liaison (13).

Dans chacun des exemples de réalisation selon les figures 3, 4 et 5, 6 le déflecteur (38) est ramené automatiquement contre le rotor (3), afin d'obtenir une réduction maximale de la largeur de la machine au transport.

Il reste alors à actionner le vérin (20) du dispositif de maintien (18) afin qu'il s'allonge et libère le ressort (19) et à déplacer la machine dans la direction (A). Le second rotor (3) et la poutre de liaison (13) pivotent automatiquement autour de l'axe (4) sensiblement vertical du premier rotor (2) et se placent derrière celui-ci. La largeur de la machine est ainsi considérablement réduite.

La commande des vérins hydrauliques (16 et 20) peut être synchronisée de manière à simplifier le travail de l'utilisateur.

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans pour autant sortir du domaine de protection tel qu'il est défini dans les revendications.

## Revendications

1. Machine de fenaison, notamment une andaineuse de végétaux fauchés, comportant un bâti (1) avec plusieurs rotors d'andainage (2 et 3), lesquels rotors d'andainage (2 et 3) sont entraînés en rotation durant le travail autour d'axes (4 et 5) sensiblement verticaux qui sont munis de supports (6) équipés de roues porteuses (7 et 8), ledit bâti (1) comprenant une poutre de traction (12) et une poutre de liaison (13) à laquelle est relié au moins un des rotors d'andainage (2, 3), la poutre de liaison (13) étant articulée par rapport à la poutre de traction (12) de manière à pouvoir être déplacée avec le ou les rotors (2, 3) qui y sont reliés latéralement vers la droite et/ou vers la gauche, au moins le rotor (3) le plus éloigné de l'articulation avec la poutre de traction (12) étant flanqué d'un déflecteur d'andainage (38) qui est réglable dans plusieurs positions par rapport audit rotor (3), ***caractérisée par le fait*** que le déflecteur d'andainage (38) est relié au moyen d'au moins un levier (31, 32) à un support (28, 30) qui est lié à l'axe (5) sensiblement vertical du rotor (3) à côté duquel se situe ledit déflecteur d'andainage (38), que le levier (31, 32) est déplaçable par rapport au support (28, 30) et qu'il est relié à la poutre de liaison (13) à travers une tringle (39).

2. Machine selon la revendication 1, ***caractérisée par le fait*** qu'elle comporte deux leviers (31 et 32) qui sont sensiblement parallèles et ont sensiblement la même longueur et qui sont articulés par rapport au support (28) et au déflecteur d'andainage (38) au moyen d'axes (33, 34 et 36, 37) sensiblement verticaux.

3. Machine selon la revendication 1 ou 2, ***caractérisée par le fait*** que la tringle (39) est articulée sur une patte (41) du levier (31) et une patte (43) solidaire de la poutre de liaison (13) au moyen d'axes (40 et 42) sensiblement verticaux.

4. Machine selon la revendication 3, ***caractérisée par le fait*** que la patte (41) se situe au-delà de l'axe d'articulation (33) du levier (31) sur le support (28, 30).

5. Machine selon la revendication 3, ***caractérisée par le fait*** qu'au moins un des axes d'articulation (40 et 42) de la tringle (39) est déplaçable.

6. Machine selon la revendication 5, ***caractérisée par le fait*** que la patte (41) comporte plusieurs orifices (44) pour l'axe d'articulation (40) de la tringle (39).

7. Machine selon la revendication 6, ***caractérisée par le fait*** que les orifices (44) de la patte (41) se situent sur un arc de cercle (45) dont le centre se situe sur l'autre axe d'articulation (42) de la tringle (39), lorsque la machine est en position de transport.

8. Machine selon la revendication 1, ***caractérisée par le fait*** que la tringle (39) est articulée sur une patte (41) solidaire du levier (31) et sur un coulisseau (46) relié à la poutre de liaison (13).

9. Machine selon la revendication 8, ***caractérisée par le fait*** que le coulisseau (46) est déplaçable sur une tige filetée (47) qui est tenue par des pattes (48 et 49) solidaires de la poutre de liaison (13).

10. Machine selon la revendication 9, ***caractérisée par le fait*** que la tige filetée (47) est libre en rotation et bloquée en translation.

11. Machine selon la revendication 10, ***caractérisée par le fait*** que la tige filetée (47) est reliée à une manivelle (50).

12. Machine selon la revendication 9, ***caractérisée par le fait*** que la tige filetée (47) est tangente à un arc de cercle (51) dont le centre se situe sur l'autre axe d'articulation (40) de la tringle (39), lorsque la machine est en position de transport.

## Patentansprüche

1. Heuwerbungsmaschine, insbesondere Schwader für gemähte Pflanzen, die ein Gestell (1) mit mehreren Schwadrotoren (2 und 3) enthält, welche im Betrieb um im wesentlichen vertikale Achsen (4 und 5), die mit mit Stützrädern (7 und 8) versehenen Tragvorrichtungen (6) ausgestattet sind, drehangetrieben werden, wobei das Gestell (1) einen Zugträger (12) und einen Verbindungsträger (13), mit dem mindestens einer der Schwadrotoren (2, 3) verbunden ist, aufweist, wobei der Verbindungsträger (13) bezüglich des Zugträgers (12) so angelenkt ist, daß er mit dem oder den damit verbundenen Rotoren (2, 3) seitlich nach rechts und/oder nach links verschoben werden kann, wobei zumindest der am weitesten vom Gelenk mit dem Zugträger (12) entfernte Rotor (3) von einem Schwad-Ablenker (38) flankiert wird, der bezüglich des Rotors (3) in mehrere Positionen einstellbar ist, ***dadurch gekennzeichnet,*** daß der Schwad-Ablenker (38) mittels mindestens eines Hebels (31, 32) mit einem Querträger (28, 30) verbunden ist, der mit der im wesentlichen vertikalen Achse (5) des Rotors (3) verbunden ist, neben dem sich der Schwad-Ablenker (38) befindet, daß der Hebel (31, 32) bezüglich des Querträgers (28, 30) verschiebbar ist und daß er über eine Stange (39) mit dem Verbindungsträger (13) verbunden ist.

2. Maschine nach Anspruch 1, ***dadurch gekennzeichnet,*** daß sie zwei Hebel (31 und 32) besitzt, die im wesentlichen parallel verlaufen und im wesentlichen die gleiche Länge aufweisen und die bezüglich des Querträgers (28) und des Schwad-Ablenkers (38) mittels im wesentlichen vertikaler Achsen (33, 34 und 36, 37) angelenkt sind.

3. Maschine nach Anspruch 1 oder 2, ***dadurch gekennzeichnet,*** daß die Stange (39) mittels im wesentlichen vertikaler Achsen (40 und 42) an einem Ansatz (41) des Hebels (31) und einem fest mit dem Verbindungsträger (13) verbundenen Ansatz (43) angelenkt ist.

4. Maschine nach Anspruch 3, ***dadurch gekennzeichnet,*** daß sich der Ansatz (41) jenseits der Gelenkachse (33) des Hebels (31) an der Tragvorrichtung (28, 30) befindet.

5. Maschine nach Anspruch 3, ***dadurch gekennzeichnet,*** daß mindestens eine der Gelenkachsen (40 und 42) der Stange (39) verschiebbar ist.

6. Maschine nach Anspruch 5, ***dadurch gekennzeichnet,*** daß der Ansatz (41) mehrere Öffnungen (44) für die Gelenkachse (40) der Stange (39) aufweist.

7. Maschine nach Anspruch 6, ***dadurch gekennzeichnet,*** daß sich die Öffnungen (44) des Ansatzes (41) auf einem Kreisbogen (45) befinden, dessen Mitte sich auf der anderen Gelenkachse (42) der Stange (39) befindet, wenn sich die Maschine in der Transportstellung befindet.

8. Maschine nach Anspruch 1, ***dadurch gekennzeichnet,*** daß die Stange (39) an einem fest mit dem Hebel (31) verbundenen Ansatz (41) und an einem mit dem Verbindungsträger (13) verbundenen Gleitstück (46) angelenkt ist.

9. Maschine nach Anspruch 8, ***dadurch gekennzeichnet,*** daß das Gleitstück (46) an einer Gewindestange (47) verschiebbar ist, die durch fest mit dem Verbindungsträger (13) verbundene Ansätze (48 und 49) festgehalten wird.

10. Maschine nach Anspruch 9, ***dadurch gekennzeichnet,*** daß die Gewindestange (47) frei drehbar und hinsichtlich einer Translationsbewegung gesperrt ist.

11. Maschine nach Anspruch 10, ***dadurch gekennzeichnet,*** daß die Gewindestange (47) mit einer Kurbel (50) verbunden ist.

12. Maschine nach Anspruch 9, ***dadurch gekennzeichnet,*** daß die Gewindestange (47) einen Kreisbogen (51) berührt, dessen Mitte sich auf der anderen Gelenkachse (40) der Stange (39) befindet, wenn sich die Maschine in der Transportstellung befindet.

## Claims

1. Hay-making machine, especially a windrower of mown plant matter, comprising a frame (1) with several windrowing rotors (2 and 3), which windrowing rotors (2 and 3) are rotated during work about substantially vertical axes (4 and 5) which are equipped with supports (6) fitted with carrier-wheels (7 and 8), the said frame (1) comprising a draft beam (12) and a connecting beam (13) to which at least one of the windrowing rotors (2, 3) is connected, the connecting beam (13) being articulated with respect to the draft beam (12) so that it can be moved, together with the rotor or rotors (2, 3) connected thereto, laterally to the right and/or to the left, at least the rotor (3) furthest from the articulation to the draft beam (12) being flanked by a windrowing deflector (38) which can be adjusted into several positions with respect to the said rotor (3), ***characterized in*** that the windrowing deflector (38) is connected by means of at least one lever (31, 32) to a support (28, 30) which is connected to the substantially vertical axis (5) of the rotor (3) beside which the said windrowing deflector (38) is situated, in that the lever (31, 32) can be moved with respect to the support (28, 30) and in that it is connected to the connecting beam (13) via a rod (39).

2. Machine according to Claim 1, ***characterized in*** that it comprises two levers (31 and 32) which are substantially parallel and have substantially the same length, and which are articulated with respect to the support (28) and to the windrowing deflector (38) by means of substantially vertical axes (33, 34 and 36, 37).

3. Machine according to Claim 1 or 2, ***characterized in*** that the rod (39) is articulated to a lug (41) of the lever (31) and a lug (43) which is rigidly fastened to the connecting beam (13) by means of substantially vertical axes (40 and 42).

4. Machine according to Claim 3, ***characterized in*** that the lug (41) is situated beyond the axis (33) articulating the lever (31) to the support (28, 30).

5. Machine according to Claim 3, ***characterized in*** that at least one of the axes of articulation (40 and 42) of the rod (39) is movable.

6. Machine according to Claim 5, ***characterized in*** that the lug (41) has several holes (44) for the axis of articulation (40) of the rod (39).

7. Machine according to Claim 6, ***characterized in*** that the holes (44) in the lug (41) are in an arc of a circle (45) the centre of which is on the other axis of articulation (42) of the rod (39) when the machine is in the transport position.

8. Machine according to Claim 1, ***characterized in*** that the rod (39) is articulated to a lug (41) which is rigidly fastened to the lever (31) and to a slide (46) connected to the connecting beam (13).

9. Machine according to Claim 8, ***characterized in*** that the slide (46) is movable along a threaded rod (47) which is held by lugs (48 and 49) which are rigidly fastened to the connecting beam (13).

10. Machine according to Claim 9, ***characterized in*** that the threaded rod (47) is free to rotate but cannot move in translation.

11. Machine according to Claim 10, ***characterized in*** that the threaded rod (47) is connected to a cranking handle (50).

12. Machine according to Claim 9, ***characterized in*** that the threaded rod (47) is tangential to an arc of a circle (51) the centre of which is on the other axis of articulation (40) of the rod (39) when the machine is in the transport position.
